# EUROPÄISCHE PATENTSCHRIFT

(11) **EP 1 761 967 B1**
(45) Veröffentlichungstag und Bekanntmachung des Hinweises auf die Patenterteilung: **07.04.2010**
(21) Anmeldenummer: 05757008.7
(22) Anmeldetag: 29.06.2005
(51) Int. Cl.: H01M 8/04

(54) **BRENNSTOFFZELLENANLAGE UND VERFAHREN ZUM BETREIBEN EINER BRENNSTOFFZELLENANLAGE**
FUEL CELL SYSTEM AND METHOD FOR OPERATING A FUEL CELL SYSTEM
SYSTEME DE PILE A COMBUSTIBLE ET PROCEDE POUR FAIRE FONCTIONNER CE DERNIER

(30) Priorität: 01.07.2004 EP 04015501
(43) Veröffentlichungstag der Anmeldung: 14.03.2007
(73) Patentinhaber: SIEMENS AKTIENGESELLSCHAFT, 80333 München (DE)
(72) Erfinder: BETTE, Willi, 91056 Erlangen (DE); COERLIN, Detlev, 91056 Erlangen (DE); STÜHLER, Walter, 96114 Hirschaid (DE)
(86) Internationale Anmeldenummer: PCT/EP2005/053051
(87) Internationale Veröffentlichungsnummer: WO 2006/003158

(56) Entgegenhaltungen:
- DE-A- 2 146 933
- DE-A- 3 732 234
- US-A- 3 256 116
- US-A- 3 580 741
- US-A1- 2003 022 037
- VOSS H ET AL: "Portable fuel cell power generator" JOURNAL OF POWER SOURCES, ELSEVIER SEQUOIA S.A. LAUSANNE, CH, Bd. 65, Nr. 1, 1. März 1997 (1997-03-01), Seiten 155-158, XP004059644 ISSN: 0378-7753

## Beschreibung

Die Erfindung betrifft eine Brennstoffzellenanlage und ein Verfahren zum Betreiben einer Brennstoffzellenanlage.

Beim Betrieb einer Brennstoffzellenanlage wird üblicherweise einem aus gestapelten Brennstoffzellen gebildeten Brennstoffzellenblock zur Erzeugung elektrischen Stroms anodenseitig ein Brenngas, beispielsweise Wasserstoff, und kathodenseitig Luft oder Sauerstoff als weiteres Reaktionsgas zugeführt. Es gibt mittlerweile eine Vielzahl von unterschiedlichen Arten von Brennstoffzellenanlagen, die sich im Hinblick auf ihren Aufbau und insbesondere im Hinblick auf die verwendeten Elektrolyte sowie im Hinblick auf die notwendige Betriebstemperatur unterscheiden. Bei einer sogenannten PEM-Brennstoffzelle (proton exchange membrane) ist zwischen einer gasdurchlässigen Anode und einer gasdurchlässigen Kathode eine Polymermembran angeordnet, die für Wasserstoffprotonen durchlässig ist. Da eine einzige Brennstoffzelle eine Spannung von lediglich etwa 0,7 bis 0,9 Volt liefert, sind mehrere Brennstoffzellen elektrisch in Serie zu einem Stapel miteinander verbunden. Die einzelnen Brennstoffzellen sind hierbei üblicherweise durch eine bipolare Platte voneinander getrennt. Die bipolare Platte weist hierbei i.d.R. eine Art Rillenstruktur auf und liegt an der Anode bzw. an der Kathode an. Durch die Rillenstruktur ist ein Gasraum zwischen der bipolaren Platte und der Anode bzw. Kathode gebildet, durch den die Reaktionsgase strömen.

Beim Betrieb einer PEM-Brennstoffzelle wandern Wasserstoffprotonen durch den Elektrolyten auf die Sauerstoffseite und reagieren mit dem Sauerstoff. Dabei fällt als Reaktionsprodukt Reaktionswasser an. Durch die üblicherweise vorgenommenen Befeuchtung der Reaktionsgase vor ihrem Eintritt in die Brennstoffzelle wird zusätzlich Wasser in die Gasräume eingebracht. Neben dem Wasser fallen zudem - je nach dem Reinheitsgrad der verwendeten Reaktionsgase - Inertgase an. Bei einer Brennstoffzellenanlage mit mehreren kaskadenartig in Reihe nacheinander angeordneten Brennstoffzellenstapeln sammeln sich das Wasser sowie die Inertgase im letzten Stapel oder der letzten Brennstoffzelle an. Dort sind die Reaktionsgase daher mit Inertgas angereichert. Aufgrund dieser "Reaktantenverdünnung" kommt es zu einem Spannungsabfall der letzten Brennstoffzelle bzw. des letzten Brennstoffzellenstapels. Dieser Brennstoffzellenstapel wird daher in gewissen Zeitabständen gespült, d.h. über ein Spülventil wird eine gasausgangsseitig an den Stapel angeschlossene Spülleitung geöffnet, so dass das angesammelte Wasser und die Inertgase ausgetragen werden. Die letzte Brennstoffzelle oder der letzte Brennstoffzellenstapel werden daher auch als Spülzelle bzw. als Spülzellenstapel bezeichnet. Der Spannungsabfall wird üblicherweise als Regelsignal für das Öffnen des Spülventils herangezogen, wie dies beispielsweise aus der US 2003/0027037 A1, der DE 37 32 234 A, der DE 21 46 923 A, der US-A-35 80 741 oder der US-A-3 256 116 hervorgeht. Durch das Spülen wird die Konzentration der Inertgase abgereichert, so dass das Spannungsniveau wieder angehoben wird.

Durch diese Bedingungen in der Spülzelle, insbesondere bei einem Absinken der Spannung bis in einen Bereich eines Korrosionpotenzials des für die Bipolarplatten verwendeten Materials, besteht eine Korrosionsgefahr für die Bipolarplatten.

Der Erfindung liegt die Aufgabe zugrunde, einen sicheren Betrieb einer Brennstoffzellenanlage mit möglichst geringer Korrosionsgefahr zu ermöglichen.

Die Aufgabe wird gemäß der Erfindung gelöst durch eine Brennstoffzellenanlage mit einem aus mehreren Brennstoffzellen bestehenden Brennstoffzellenstapel, dem gaseingangsseitig Reaktionsgase zuführbar sind und der gasausgangsseitig an einer Spülzelle zumindest ein Spülventil aufweist. Die Anlage umfasst weiterhin eine Steuerung, insbesondere eine Regelung, die die Betätigung des Spülventils in Abhängigkeit der Spannung der Spülzelle steuert. Der Spannungsabgriff zur Messung der Spannung in der Spülzelle erfolgt dabei im Bereich eines Gasaustritts zum Spülventil. Unter "im Bereich des Gasaustritts" wird hierbei die Anordnung des Spannungsabgriffs in etwa auf der Höhe des Gasaustritts verstanden. Zweckdienlicherweise erfolgt der Spannungsabgriff hierbei im - in Strömungsrichtung der Reaktionsgase gesehen - unteren oder untersten Bereich der Spülzelle.

Dieser Ausgestaltung liegt die Überlegung zugrunde, dass sich die angesammelten Inertgase in der Spülzelle nicht gleichmäßig verteilen, sondern sich vielmehr im in Strömungsrichtung unteren Bereich der Spülzelle ansammeln. Beim Betrieb stellt sich daher in Strömungsrichtung des Gases von einem oberen Gaseintritt zu dem unteren Gasaustritt ein Konzentrationsgefälle der Reaktionsgase ein. Hierdurch bedingt ist die in der Spülzelle erzeugte Spannung im Bereich des oberen Gaseintritts je nach Inertgaskonzentration zum Teil deutlich höher als die Spannung im unteren Bereich in der Nähe des Gasaustritts. Bei einer Regelung mit einem oberen Spannungsabgriff im Bereich des Gaseintritts würde daher die Gefahr bestehen, dass in unteren Teilbereichen der Spülzelle nur noch geringe Spannungen aufrechterhalten sind, so dass dort eine hohe Korrosionsgefahr besteht. Durch den Spannungsabgriff im unteren Bereich nahe des Gasaustritts ist die Steuerung oder Regelung für die Betätigung des Spülventils sehr genau und sehr sensibel und es ergeben sich deutliche regelungstechnische Verbesserungen. Insbesondere ist dadurch vermieden, dass in Teilbereichen der Brennstoffzelle ein vorgegebener minimaler Spannungswert, welcher die untere Regelungsgrenze darstellt, unterschritten wird. Im Vergleich zu einem Spannungsabgriff im oberen Bereich kommt es dabei zu vermehrten Spülvorgängen, d.h. die Spülrate ist erhöht. Vorzugsweise erfolgt der Spannungsabgriff hierbei im Bereich einer Randseite einer Bipolarplatte, über die die Brennstoffzelle begrenzt ist, wobei im Bereich der Randseite der Gasaustritt für das Reaktionsgas vorgesehen ist.

Für eine möglichst effiziente Ausnutzung der Reaktionsgase weist die Brennstoffzellenanlage mehrere kaskadenartig angeordnete Brennstoffzellenstapel auf. Hierunter wird eine Abfolge von Brennstoffzellenstapel verstanden, die in Serie von den Reaktionsgasen durchströmt werden, wobei in Strömungsrichtung der Reaktionsgase die Anzahl der Brennstoffzellen der einzelnen aufeinander folgenden Stapel sukzessive abnimmt. Die Abnahme der Anzahl der Brennstoffzellen ist hierbei auf die jeweilige Restgasmenge abgestimmt, welche aus dem vorhergehenden Brennstoffzellenstapel austritt. Der letzte Brennstoffzellenstapel ist als Spülzellenstapel mit einer oder mehreren Spülzellen ausgebildet, an den sich das Spülventil anschließt.

Vorzugsweise ist die Brennstoffzellenanlage mit PEM-Brennstoffzellen ausgebildet.

Die Aufgabe wird erfindungsgemäß weiterhin gelöst durch ein Verfahren zum Betreiben einer Brennstoffzellenanlage, die einen Brennstoffzellenstapel aufweist, dem gaseingangsseitig Reaktionsgase zugeführt werden und der gasausgangsseitig eine Spülzelle mit einem Spülventil aufweist, wobei die Spannung der Spülzelle im Bereich eines Gasaustritts zum Spülventil gemessen und in Abhängigkeit der Spannung der Spülzelle die Betätigung des Spülventils gesteuert wird.

Die im Hinblick auf die Brennstoffzellenanlage angeführten Vorteile und bevorzugten Ausgestaltungen sind sinngemäß auch auf das Verfahren anzuwenden.

Ein Ausführungsbeispiel der Erfindung wird im Folgenden anhand der Zeichnungen näher erläutert. Es zeigen jeweils in schematischen und stark vereinfachten Darstellungen:
- FIG 1: einen Aufbau einer Brennstoffzellenanlage mit kaskadenartig angeordneten Brennstoffzellenstapeln,
- FIG 2: eine metallische Bipolarplatte mit einem oberen Gaseintritt und einem unteren Gasaustritt,
- FIG 3A: ein in einem oberen Bereich der Bipolarplatte gemessenen Spannungsverlauf bei einer Spülzellenregelung in Abhängigkeit von einem oberen Spannungsabgriff,
- FIG 3B: der zu der Regelung gemäß Fig 3A in Abhängigkeit des oberen Spannungsabgriffs gemessene Spannungsverlauf im unteren Bereich der Bipolarplatte,
- FIG 4A: ein im unteren Bereich der Bipolarplatte gemessener Spannungsverlauf bei einer Spülzellenregelung in Abhängigkeit von einem unteren Spannungsabgriff im Bereich des Gasaustritts und
- FIG 4B: die zu der Regelung gemäß FIG 4A in Abhängigkeit des unteren Spannungsabgriffs gemessene Spannungsverlauf im oberen Bereich der Bipolarplatte.

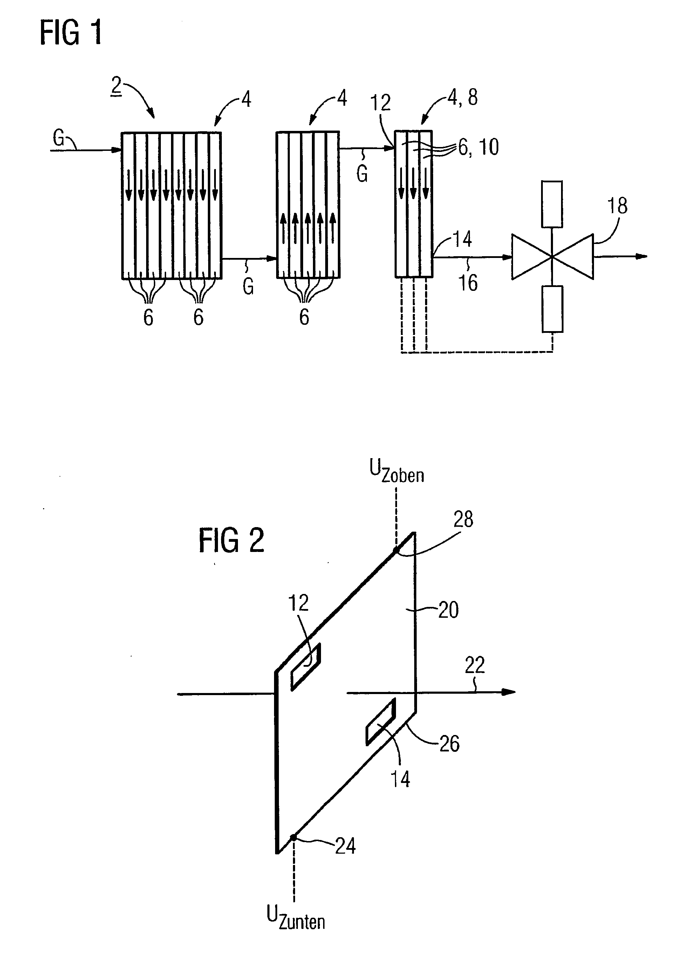

Gemäß FIG 1 umfasst eine Brennstoffzellenanlage 2 mehrere kaskadenartig zueinander angeordnete Brennstoffzellenstapel 4, die wiederum jeweils aus mehreren Brennstoffzellen 6 bestehen. Die einzelnen Brennstoffzellenstapel 4 sind hierbei gasseitig in Serie zueinander angeordnet. Dem gasseitig ersten Brennstoffzellenstapel wird ein Reaktionsgas G in einem oberen Bereich zugeführt und durchströmt die einzelnen Brennstoffzellen 6 parallel in Richtung der Pfeile nach unten. Dort verlässt das Reaktionsgas G den ersten Brennstoffzellenstapel 4 und wird in den nächsten Brennstoffzellenstapel 4 geleitet.

Der letzte Brennstoffzellenstapel ist als Spülzellenstapel 8 mit mehreren Spülzellen 10 ausgebildet. Dem Spülzellenstapel 8 wird das Reaktionsgas G im Bereich eines Gaseintritts 12 zugeführt und durchströmt die einzelnen Spülzellen 10 nach unten in Richtung zu einem Gasaustritt 14. An den Gasaustritt 14 schließt sich eine Spülleitung 16 an, die über ein regelbares Spülventil 18 verschließbar ist.

Die einzelnen Spülzellen 10 sind jeweils voneinander durch eine in FIG 2 schematisch dargestellte Bipolarplatte 20 voneinander getrennt, die jeweils den oberen Gaseintritt 12 und den unteren Gasaustritt 14 aufweisen. Die Begriffe "unten" und "oben" beziehen sich hier auf die Strömungsrichtung des Reaktionsgases G. Die Richtung 22 des im Betrieb fließenden elektrischen Stroms ist senkrecht zu der Bipolarplatte 20 orientiert, wie durch den Pfeil angedeutet ist.

Beim Betrieb der Brennstoffzellenanlage ist das Spülventil 18 zunächst geschlossen, so dass sich in den Spülzellen 10 das bei der Reaktion entstehende Reaktionswasser G sowie Inertgase anreichern, die in den Reaktionsgasen vorhanden sind. Durch die Anreicherung der Inertgase fällt die Spülzellenspannung ab. Diese wird gemessen und zur Regelung eines Spülvorgangs herangezogen, also zur Regelung des Spülventils 18. Unterschreitet die Spannung einen vorgegebenen Regelwert, öffnet das Spülventil 18 und das Reaktionswasser sowie das in den Spülzellen 10 befindliche Restgas, insbesondere die Inertgase werden ausgetragen. Zweckdienlicherweise werden hierbei sowohl die Sauerstoff- oder Kathodenseite als auch die Wasserstoff- oder Anodenseite der Spülzellen 10 vorzugsweise jeweils über ein eigenes Spülventil 18, insbesondere gleichzeitig gespült.

Aufgrund der Anreicherung mit Inertgasen werden die Spülzellen nur noch unzureichend mit den Reaktionsgasen bei gleichzeitig fließendem Strom versorgt. Es liegen daher die Randbedingungen für eine Wasser-Elektrolyse vor und es kommt auf der Anodenseite zu der Teilreaktion 40H⁻>O₂+2H₂O+2e⁻. Es wird also Sauerstoff gebildet, der bei der üblicherweise metallischen Bipolarplatte 20 zu Korrosion führen kann. Dieses Problem besteht insbesondere dann, wenn die Spannung in den Spülzellen 10 bis in die Bereich des Korrosionspotenzials des für die Bipolarplatten 20 verwendeten Materials absinkt.

Um eine derartige Korrosion zu vermeiden und um die Spannung der Spülzellen 10 möglichst in keinem Teilbereich der Spülzellen 10 unter einen bestimmten Schwellwert absinken zu lassen, ist vorgesehen, dass ein Spannungsabgriff 24 für die Regelung der Spülung im unteren Bereich der bipolaren Platte 20 in etwa auf der Höhe des Gasaustritts 14, insbesondere an der unteren Randseite 26 der bipolaren Platte 20 erfolgt. An diesem unteren Spannungsabgriff 24 wird die untere Zellspannung U_{Zunten} gemessen. In FIG 2 ist weiterhin ein oberer Spannungsabgriff 28 strichpunktiert angedeutet, an dem eine obere Zellspannung U_{Zoben} abgegriffen wird.

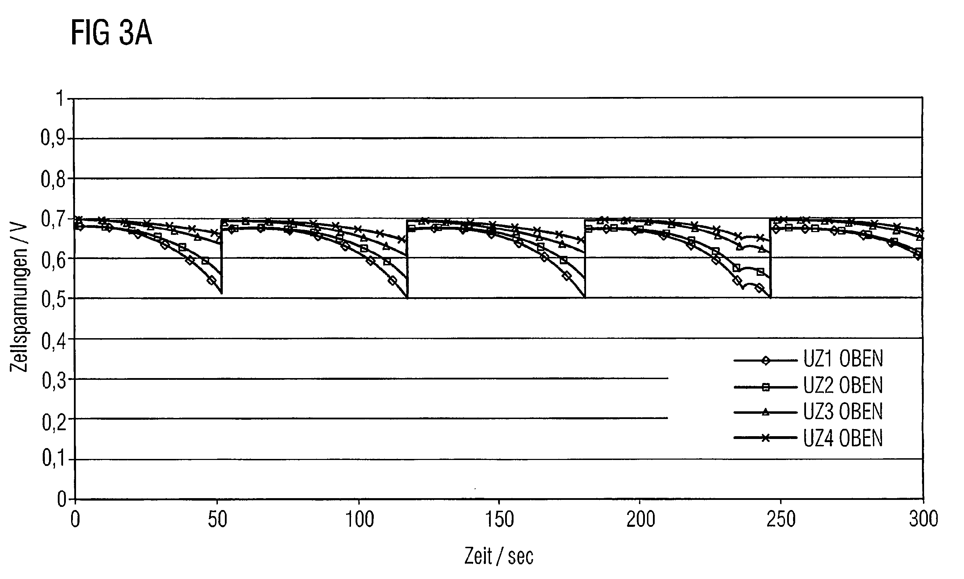

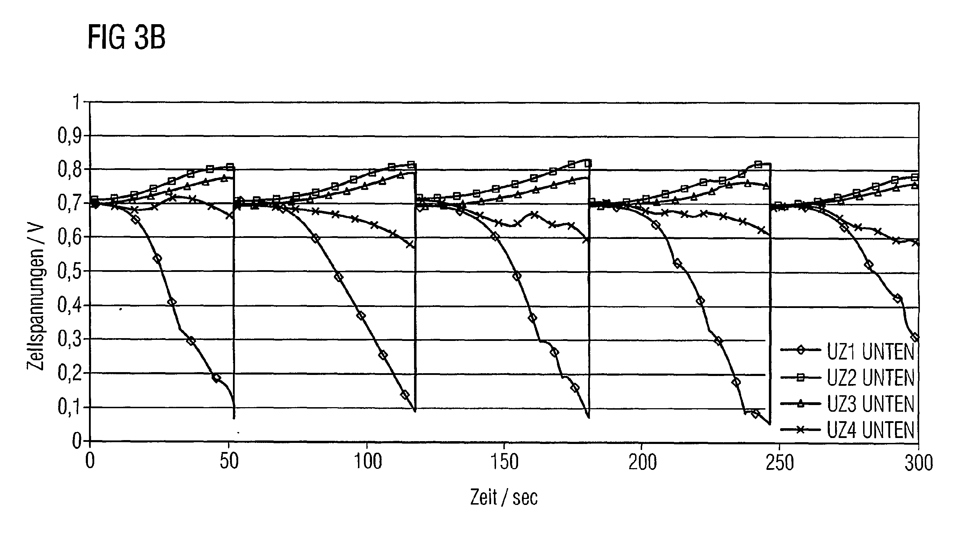

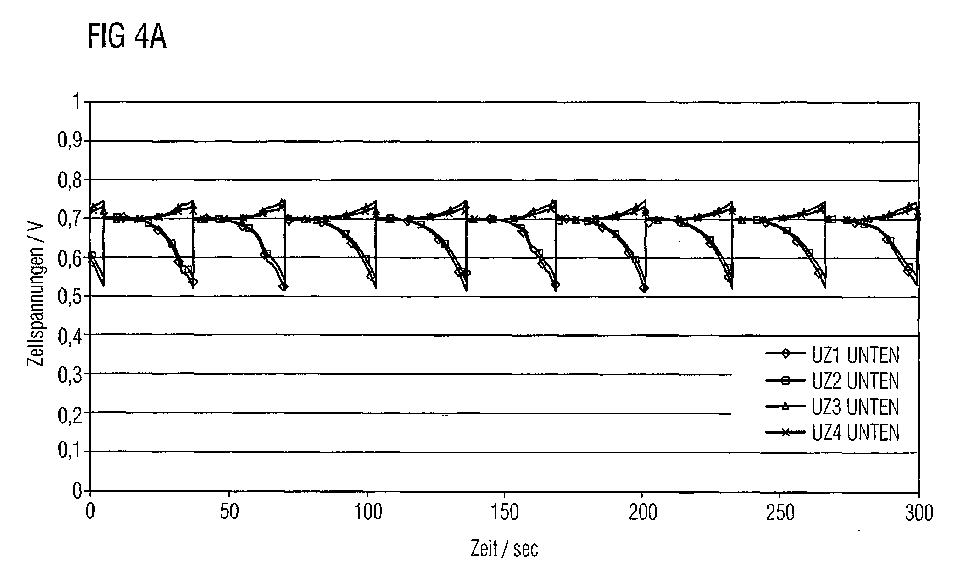

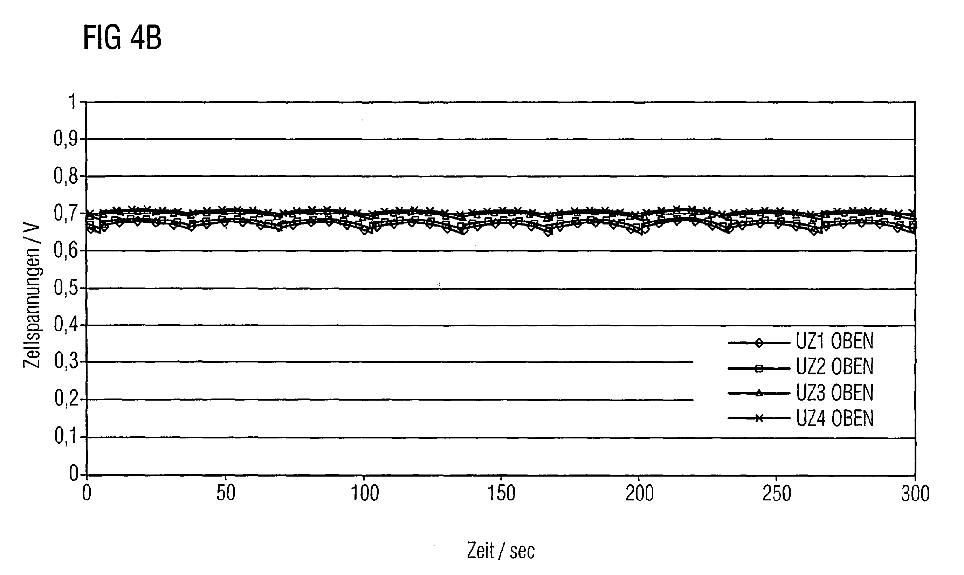

Durch den unteren Spannungsabgriff 24 ist eine im Vergleich zum oberen Spannungsabgriff 28 deutlich sensiblere und verbesserte Spannungsregelung erreicht. Insbesondere ist dadurch wirksam verhindert, dass im unteren Bereich der Bipolarplatte 20 die Spannung unter einen gewünschten Schwellwert von beispielsweise etwa 0,5 Volt fällt. Der Schwellwert wird hier bevorzugt derart gewählt, dass er oberhalb des Korrosionspotenzials des Materials der Bipolarplatte 20 liegt. Messungen haben nämlich ergeben, dass sich zwischen U_{Zoben} und U_{Zunten} ein deutliches Spannungsgefälle einstellt, welches darauf zurückzuführen ist, dass die Inertgase sich in erster Linie in der Nähe des Gasaustritts 14 anreichern. Die Unterschiede zwischen einer Spülzellenregelung in Abhängigkeit von U_{Zoben} bzw. in Abhängigkeit von U_{Zunten} ergeben sich aus den Spannungsverläufen gemäß den FIG 3A, 3B, 4A, 4B.

Die beispielhaft dargestellten einzelnen Spannungsverläufe beruhen hierbai auf einer Testanlage mit einem Spülzellenstapel 8 mit vier Spülzellen 10, die jeweils von einem Strom von etwa 560 A durchflossen wurden. In den Diagrammen sind jeweils die Kurvenverläufe der vier Spülzellen 10 dargestellt.

Bei den FIG 3A, 3B erfolgte eine Regelung der Spülung in Abhängigkeit der Spannung U_{Zoben}, bei den Darstellungen gemäß den FIG 4A, 4B eine Regelung der Spülung in Abhängigkeit der Spannung U_{Zunten}. In FIG 3A ist hierbei die Spannung U_{Zoben} und in FIG 3B die Spannung U_{Zunten} aufgetragen. In der FIG 4A ist die Spannung U_{Zunten} und in FIG 4B die Spannung U_{Zoben} aufgetragen.

Wie sich aus einem Vergleich der FIG 3A, 3B ergibt, kommt es bei einer Regelung in Abhängigkeit von U_{Zoben} teilweise zu dramatischen Spannungseinbrüchen im unteren Zellbereich wie sich aus dem Spannungsverlauf U_{Zunten} ergibt. Trotz einer Regelung auf eine untere Zellspannung von etwa 0,5 für U_{Zoben} kommt es teilweise zu einem Spannungsabfall unter 0,1 Volt beim unteren Spannungsabgriff 24 für U_{Zunten}. Wie sich weiterhin aus den Diagrammen entnehmen lässt, findet aufgrund dieser Regelung in Abhängigkeit von U_{Zoben} bei den gewählten Randbedingungen die Spülung etwa alle 50 - 60 Sekunden statt. Nach einem Spülvorgang erreichen die Spannungswerte in den einzelnen Spülzellen 10 wieder die Normalspannung von etwa 0,7 Volt.

Im Unterschied zu einer Regelung nach U_{Zoben} ist eine Regelung nach U_{Zunten} deutlich sensibler und genauer, wie sich aus den FIG 4A und 4B ergibt. Wie sich aus FIG 4A unmittelbar entnehmen lässt, ist auch im unteren Bereich der Bipolarplatte 20 nunmehr kein Spannungsabfall unter den eingestellten Regelungswert von 0,5 Volt gegeben. Gleichzeitig bleibt die Spannung im oberen Bereich in der Nähe des oberen Spannungsabgriffs 28 auf einem annähernd gleichbleibend hohen Niveau zwischen 0,65 und 0,7 Volt (FIG 4B).

Wie sich insbesondere aus dem Vergleich der FIG 3A und 4A ergibt, ist bei der sensibleren Regelung in Abhängigkeit von U_{Zunten} eine etwa doppelt so hohe Spülrate vorgesehen, wie bei der Regelung nach U_{Zoben}. Bei den gewählten Randbedingungen wird nämlich gemäß FIG 4A alle etwa 30 - 35 Sekunden gespült.

Durch die häufigeren Spülvorgänge sammeln sich daher weniger Reaktionswasser und weniger Inertgase in den Spülzellen 10 an. Die Spülzellenspannung bleibt deutlich höher. Insgesamt ist dadurch die Korrosionsgefahr für die Bipolarplatten 20 verringert. Um den durch das häufigere Spülen bedingten Verlust an Rest-Reaktionsgasen möglichst gering zu halten, wird die Spülzeit oder der Strömungsquerschnitt des Spülventils 18 entsprechend klein gewählt.

## Patentansprüche

1. Brennstoffzellenanlage (2) mit zumindest einem Brennstoffzellenstapel (4), dem gaseingangsseitig Reaktionsgase (G) zuführbar sind und der gasausgangseitig an einer Spülzelle (10) zumindest ein Spülventil (18) aufweist, und mit einer Steuerung, die die Betätigung des Spülventils (18) in Abhängigkeit der Spannung (U_{Zunten}) der Spülzelle (10) steuert, wobei ein Spannungsabgriff (24) im Bereich eines Gasaustritts (14) zum Spülventil (18) vorgesehen ist.

2. Brennstoffzellenanlage (2) nach Anspruch 1, bei der zwischen zwei Brennstoffzellen (6,10) eine Bipolarplatte (20) angeordnet ist, der Gasaustritt (14) im Bereich der unterer Randseite (26) der Bipolarplatte (20) angeordnet ist und im Bereich dieser Randseite (26) der Spannungsabgriff (24) vorgesehen ist.

3. Brennstoffzellenanlage (2) nach Anspruch 1 oder 2, bei der mehrere kaskadenartig angeordnete Brennstoffzellenstapel (4) vorgesehen sind.

4. Brennstoffzellenanlage (2) nach einem der vorhergehenden Ansprüche, bei der PEM-Brennstoffzellen (6,10) verwendet werden.

5. Verfahren zum Betreiben einer Brennstoffzellenanlage (2), die zumindest einen Brennstoffzellenstapel (4) aufweist, dem gaseingangsseitig Reaktionsgase (G) zugeführt werden und der gasausgangsseitig eine Spülzelle (10) mit einem zugeordneten Spülventil (18) aufweist, wobei die Spannung (U_{Zunten}) der Spülzelle (10) im Bereich eines Gasaustritts (14) zum Spülventil (18) gemessen und in Abhängigkeit der gemessenen Spannung (U_{Zunten}) die Betätigung des Spülventils (18) gesteuert wird.

6. Verfahren nach Anspruch 5, bei dem mehrere kaskadenartig angeordnete Brennstoffzellenstapel (4) vorgesehen sind, die von den Reaktionsgasen (G) seriell durchströmt werden.

## Claims

1. Fuel cell system (2) having at least one fuel cell stack (4) to which reaction gases (G) can be ducted on the gas inlet side and which on the gas outlet side has at least one purge valve (18) on a purge cell (10), and having a control device that controls actuating of the purge valve (18) as a function of the voltage (U_{Cbottom}) of the purge cell (10), with a voltage tap (24) being provided in the vicinity of a gas outlet (14) toward the purge valve (18).

2. Fuel cell system (2) according to claim 1, wherein a bipolar plate (20) is arranged between two fuel cells (6, 10), the gas outlet (14) is arranged in the vicinity of the bottom edge side (26) of the bipolar plate (20), and the voltage tap (24) is provided in the region of said edge side (26).

3. Fuel cell system (2) according to claim 1 or 2, wherein are provided a plurality of fuel cell stacks (4) arranged in a cascaded manner.

4. Fuel cell system (2) according to one of the preceding claims, wherein PEM fuel cells (6, 10) are employed.

5. Method for operating a fuel cell system (2) having at least one fuel cell stack (4) to which reaction gases (G) are ducted on the gas inlet side and which on the gas outlet side has a purge cell (10) having an assigned purge valve (18), with the voltage (U_{Cbottom}) of the purge cell (10) being measured in the vicinity of a gas outlet (14) toward the purge valve (18) and with actuating of said purge valve (18) being controlled as a function of said measured voltage (U_{Cbottom}).

6. Method according to claim 5, wherein are provided a plurality of fuel cell stacks (4) arranged in a cascaded manner through which the reaction gases (G) flow in series.

## Revendications

1. Installation ( 2 ) de piles à combustible, comprenant au moins un empilement ( 4 ) de piles à combustible, auquel des gaz ( G ) de réaction peuvent être envoyés du côté de l'entrée des gaz et qui a, du côté de la sortie des gaz, sur une pile ( 10 ) de vidange au moins une vanne ( 18 ) de vidange, et comprenant une commande qui commande l'actionnement de la vanne ( 18 ) de vidange en fonction de la tension ( Uzunten ) de la pile ( 10 ) de vidange, dans laquelle il est prévu une prise ( 24 ) de tension dans la zone d'une sortie ( 14 ) des gaz allant à la vanne ( 18 ) de vidange.

2. Installation ( 2 ) de pile à combustible suivant la revendication 1, dans laquelle il est monté entre deux piles ( 6, 10 ) à combustible une plaque ( 20 ) bipolaire, la sortie ( 14 ) des gaz est disposée dans la zone du côté ( 26 ) de bord inférieur de la plaque ( 20 ) bipolaire et la prise ( 24 ) de tension est prévue dans la zone de ce côté ( 26 ) de bord.

3. Installation ( 2 ) de pile à combustible suivant la revendication 1 ou 2, dans laquelle il est prévu plusieurs empilements ( 4 ) de piles à combustible disposés en cascade.

4. Installation ( 2 ) de pile à combustible suivant l'une des revendications précédentes, dans laquelle on utilise des piles ( 6, 10 ) à combustible PEM.

5. Procédé pour faire fonctionner une installation ( 2 ) de piles à combustible, qui a au moins en empilement ( 4 ) de piles à combustible, auquel sont envoyés, du côté de l'entrée, des gaz ( G ) de réaction et qui a, du côté de la sortie des gaz, une pile ( 10 ) de vidange ayant une vanne ( 18 ) de vidange associée, dans lequel on mesure la tension ( Uzunten ) de la pile ( 10 ) de vidange dans la zone d'une sortie ( 14 ) des gaz allant à la vanne ( 18 ) de vidange et on commande l'actionnement de la vanne ( 18 ) de vidange en fonction de la tension ( Uzunten ) mesurée.

6. Procédé suivant la revendication 5, dans lequel on prévoit plusieurs empilements ( 4 ) de piles à combustible en cascade, qui sont parcourus en série par les gaz ( G ) de réaction.
